# EUROPEAN PATENT SPECIFICATION

(11) **EP 3 002 074 B1**
(45) Date of publication and mention of the grant of the patent: **19.07.2017**
(21) Application number: 15185128.4
(22) Date of filing: 14.09.2015
(51) Int. Cl.: B23K 9/032, B23K 26/242

(54) **METHOD OF MANUFACTURING AN ALUMINUM FUEL TANK, AN ALUMINUM FUEL TANK AND A STRADDLED VEHICLE**
VERFAHREN ZUR HERSTELLUNG VON EINEM ALUMINIUMKRAFTSTOFFTANK, ALUMINIUMKRAFTSTOFFTANK UND GRÄTSCHSITZFAHRZEUG
PROCÉDÉ DE FABRICATION D'UN RÉSERVOIR DE COMBUSTIBLE D'ALUMINIUM, RÉSERVOIR DE COMBUSTIBLE EN ALUMINIUM ET VÉHICULE À CALIFOURCHON

(30) Priority: 01.10.2014 JP 2014202783
(43) Date of publication of application: 06.04.2016
(73) Proprietor: Yamaha Hatsudoki Kabushiki Kaisha, Shizuoka-ken Shizuoka 438-8501 (JP)
(72) Inventor: Miyamoto, Masatoshi, Shizuoka, Shizuoka 438-8501 (JP); Iida, Kazuya, Shizuoka, Shizuoka 438-8501 (JP); Suzuki, Takaharu, Shizuoka, Shizuoka 438-8501 (JP); Mitsui, Noboru, Shizuoka, Shizuoka 438-8501 (JP)
(74) Representative: Moreland, David

(56) References cited:
- EP-A2- 1 659 054
- JP-A- 2006 159 240
- US-A- 3 245 143

## Description

### FIELD OF THE INVENTION

The present invention relates to a method of manufacturing an aluminum fuel tank, an aluminum fuel tank, and a straddled vehicle or a straddle-type or saddle-ride vehicle. The invention more particularly relates to a method of manufacturing a fuel tank formed using a sheet metal of an aluminum-based material, a fuel tank formed using sheet metal of an aluminum-based material, and a straddled vehicle having an aluminum fuel tank.

### BACKGROUND OF THE INVENTION

A fuel tank is for example provided in a straddled vehicle. An example of the straddled vehicle is a motorcycle.

Iron has been known as a typical material for a fuel tank. In order to produce a lightweight fuel tank, an aluminum-based material (e.g. aluminum or an aluminum alloy) is used as a material for a fuel tank in some cases. In the following description, the aluminum-based material will be simply referred to as aluminum.

A fuel tank disclosed by JP 2006-168713 A (see also EP-A-1 659 054) for example has upper and lower members made of aluminum. In the fuel tank disclosed by JP 2006-168713 A, the upper member and the lower member do not have the same sheet thickness. In the process of manufacturing the fuel tank, the upper member is placed to cover the lower member, and the upper member and the lower member are put together by welding.

In the conventional fuel tank described above, however, it is difficult to weld the upper member and the lower member together. One reason for the difficulty is that welding aluminum itself is difficult, and another reason is that the dimensions of the upper and lower members must be managed strictly in order to keep sufficient welding accuracy between the upper and lower members.

When the upper member and the lower member are placed on each other in order to weld these members together, a gap may be generated at parts to be welded because of a dimensional error. If the gap is large, it would be hard to achieve high accuracy in welding the upper member and the lower member together.

If a gap is generated at parts to be welded, welding may be carried out while the gap is corrected. For example, the upper member may be pressed against the lower member to narrow the gap during welding. However, it would not be easy to correct the gap because the pressure may deform the lower member.

Alternatively, the parts to be welded may be pinched to reduce the gap during welding. However, the parts to be welded must be pinched both from the inner and outer sides using a jig while the upper and lower members are placed on each other. While the upper and lower members are placed on each other, it would be difficult to insert the jig inside. Therefore, it would not be easy to weld while the parts to be welded are pinched to reduce the gap.

As described above, in the conventional fuel tank, it is be difficult to correct a gap generated between the parts of the upper and lower members to be welded and high welding accuracy cannot be achieved. Therefore, strict dimensional management must be carried out to reduce the gap between the upper member and the lower member.

When the members having different thicknesses are welded together, the thinner member may melt faster than the thicker member. If the thinner member melts to excess, a weld bead may not form in an intended position. For example, as disclosed by JP 2006-168713 A, Figure 17, a dimensional error in a position for welding an end of the upper member and an outer surface of the lower member may cause an error in an overlapping position between the upper member and the lower member. When welding is carried out in this state, the end of the thinner upper member cannot be welded correctly, the upper member may melt to excess, and a weld bead may not form in an intended position. Therefore, strict dimensional management must be performed so that the error in the overlapping position between the upper and lower members is reduced.

An object of at least one embodiment of at least one aspect of the invention is to provide a method of manufacturing an aluminum based fuel tank that can provide an allowance in dimensional management of members that form the fuel tank while improving welding accuracy, an aluminum fuel tank manufactured by such a method, and a straddled vehicle having such an aluminum fuel tank.

It is an object of at least one embodiment of at least one aspect of the present invention to obviate or at least mitigate one or more problems or disadvantages in the prior art.

### SUMMARY OF INVENTION

Various aspects of the present invention are defined in the independent claims. Some preferred features are defined in the dependent claims.

According to a first aspect of the present invention is a method of manufacturing an aluminum-based fuel tank in accordance with claim 1. The fuel tank may be a fuel tank for a straddled vehicle, such as a saddle-pride vehicle or a straddle-type vehicle.

By the method of manufacturing a fuel-tank, such as an aluminum fuel tank, as described above, the first and second flanges are opposed and the edge of the first flange and the edge of the second flange may be welded together to produce a fuel tank. If a gap is generated between the first and second flanges as the flanges are opposed, correction to reduce the gap between the first and second flanges may be carried out. More specifically, the opposed first and second flanges may be pinched from the outside using a jig or the like, so that the gap between the first and second flanges may be reduced. Therefore, an allowance may be provided in dimensional management of the first and second flanges in the direction of the gap while the welding accuracy may be improved.

The second flange has the excess part that projects beyond the edge of the first flange. The second flange is formed to have the excess part with respect to the first flange. The positional relation in which the edge of the second flange may project beyond the edge of the first flange while the first and second panels are combined, may likely be maintained if there is a dimensional error in the first and second flanges. More specifically, if there is a dimensional error in the first and second flanges, a reversed positional relation in which the edge of the first flange projects beyond the edge of the second flange may be unlikely. Therefore, a dimensional error may be allowed in the first and second flanges in welding, and an allowance may be provided in dimensional management of the edges of the first and second flanges in the projecting direction while the welding accuracy may be improved.

Moreover, the second panel is thinner than the first panel, and the thinner second flange melts easily than the first flange when the edges of the first and second flanges are welded together. Therefore, when the edges of the first and second flanges are welded together, the excess part of the second flange melts faster than the first flange. As a result, a weld bead with little or no excess part may form at the edges of the first and second flanges, and the first and second flanges may be put together.

In the third step and/or in the combining of the first and second panels, a first surface of the first flange, which may be continuous with an inner surface of the first panel main body, and a second surface of the second flange, which may be continuous with an inner surface of the second panel main body, may be opposed.

In the first sub step of the second step and/or in the forming of the second panel main body and the second flange, an opening angle of the second flange with respect to the second panel main body may be in a range from 3° to 60°, e.g. from 20° to 40°.

In the first sub-step of the first step and/or in the forming the first panel main body and the first flange, an opening angle formed between a vertical virtual line in a rear sectional view through a part where the first flange and the first panel main body part are connected and the left first side flange may be in a range from 3° to 60°, e.g. from 20° to 40°.

The opening angle of the second flange with respect to the second panel main body may correspond or be equal to the opening angle formed between a vertical virtual line in a rear sectional view through a part where the first flange and the first panel main body part are connected.

In the first sub step of the second step and/or in the forming of the second panel main body and the second flange, a connection part between the second panel main body and the second flange may have a radius of curvature in a range from 6 mm to 12 mm.

In the third step and/or in the combining of the first and second panels, the second panel may be provided on the first panel.

In the fourth step and/or as part of the welding, when the excess part is welded, a welding torch may be provided on a side of the first flange with respect to a virtual plane defined by extending the second flange.

In the fourth step and/or as part of the welding, arc welding or laser welding may be used.

### BRIEF DESCRIPTION OF DRAWINGS

An embodiment of the present invention will now be described, by way of example only, with reference to the accompanying drawings, which are:
- **Figure 1**: a left side view of a motorcycle;
- **Figure 2**: a perspective view of first and second panels that form an aluminum fuel tank;
- **Figure 3**: a plan view of the aluminum fuel tank;
- **Figure 4**: a left side view of the aluminum fuel tank;
- **Figure 5**: a rear sectional view taken along line A-A in Figure 4;
- **Figure 6**: a plan view of the first panel;
- **Figure 7**: a left side view of the first panel;
- **Figure 8**: a rear sectional view taken along line B-B in Figure 7;
- **Figure 9**: a plan view of the second panel;
- **Figure 10**: a left side view of the second panel;
- **Figure 11**: a side sectional view taken along line C-C in Figure 9;
- **Figure 12**: a rear sectional view taken along line D-D in Figure 10;
- **Figure 13**: a left side view showing how the second panel is placed on the first panel in a third step of a method of manufacturing the aluminum fuel tank according to the invention;
- **Figure 14**: a rear sectional view taken along line E-E in Figure 13;
- **Figure 15**: a left side view showing how the second panel is placed on the first panel in a combining step corresponding to the third step of the method of manufacturing the fuel tank;
- **Figure 16**: an enlarged rear sectional view taken along line F-F in Figure 15;
- **Figure 17**: an enlarged rear sectional view taken along line G-G in Figure 15;
- **Figure 18**: an enlarged rear sectional view showing a positional relation between a part taken along line F-F in Figure 15 and a torch T in a welding step corresponding to a fourth step of the method of manufacturing the fuel tank;
- **Figure 19**: an enlarged rear sectional view showing a positional relation between a part taken along line G-G in Figure 15 and the torch T in the welding step;
- **Figure 20**: an enlarged rear sectional view showing a state of the part taken along line F-F in Figure 15 after welding in the welding step; and
- **Figure 21**: an enlarged rear sectional view of the part taken along line G-G in Figure 15 after welding in the welding step.

### DESCRIPTION OF THE EMBODIMENTS

A method of manufacturing an aluminum based fuel tank according to an embodiment of the invention will now be described in conjunction with the accompanying drawings. The same or corresponding portions in the drawings are designated by the same reference characters and their description will not be repeated.

### Overall Structure

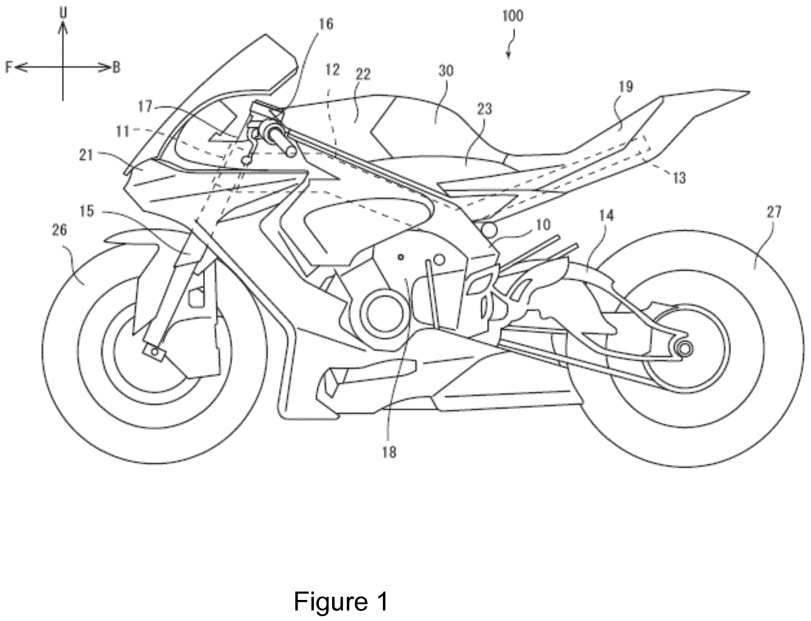

Figure 1 is a left side view of the motorcycle 100. In the following description, the front, back, left, and right refer to these positions as viewed from a rider seated on a seat 19 of the motorcycle 100. In the drawings, the arrow F indicates a forward direction of the motorcycle 100, and the arrow B indicates a backward direction of the motorcycle 100. The arrow R indicates a rightward direction of the motorcycle 100, and the arrow L indicates a leftward direction of the motorcycle 100. The arrow U indicates an upward direction of the motorcycle 100.

The motorcycle 100 includes a vehicle body frame 10, a power unit 18, a front wheel 26, a rear wheel 27, and an aluminum fuel tank 30. Hereinafter, the aluminum fuel tank 30 will be simply referred to as the "fuel tank 30" in some cases. In addition, the 'aluminum fuel tank' includes aluminum based fuel tanks, which may be formed from aluminum, or aluminum alloy, for example.

The vehicle body frame 10 includes a head pipe 11, tank frames 12, rear frames 13, and rear arms 14. The head pipe 11 is provided at a front part of the motorcycle 100. The tank frames 12 are formed as a pair of left and right tank frames. The tank frames 12 extend rearward from the head pipe 11. In a side view of the motorcycle 100, the left and right tank frames 12 each have a part curved downward. The curved parts of the tank frames 12 are connected with left and right rear frames 13, respectively. The rear arms 14 are connected to rear ends of the tank frames 12.

The head pipe 11 has a steering shaft 17 rotatably inserted therein. A handle 16 is connected to an upper part of the steering shaft 17. A front fork 15 is attached to the steering shaft 17 through a bracket (not shown). The front wheel 26 is supported rotatably at a lower end of the front fork 15. The front wheel 26 rotates to the left and right as the handle 16 is operated.

The rear wheel 27 is supported rotatably at rear ends of the rear arms 14. The rear wheel 27 rotates as motive power from the power unit 18 is transmitted thereto.

The fuel tank 30 is attached to the tank frames 12 and the rear frames 13. In a side view of the motorcycle 100, the seat 19 is disposed behind the fuel tank 30. A front part of the seat 19 covers a part of a rear part of the fuel tank 30.

A front cowl 21 is provided ahead or forwardly of the handle 16. A cover 22 is provided behind the handle 16. A rear part of the cover 22 covers a part of a front part of the fuel tank 30. A pair of left and right side covers 23 is provided under the cover 22. The side covers 23 are attached to the tank frames 12 and the rear frames 13. The side covers 23 cover a part of a lower part of the fuel tank 30 in a side view of the motorcycle 100.

As described above, the seat 19, the cover 22, and the side covers 23 cover the rear part, the front part, and the lower parts of the side surfaces of the fuel tank 30 to surround them. Therefore, the part of the fuel tank 30 covered by the seat 19, the cover 22, and the side covers 23 is not visible in the outer appearance of the motorcycle 100 in a side view and a plan view.

### Fuel Tank

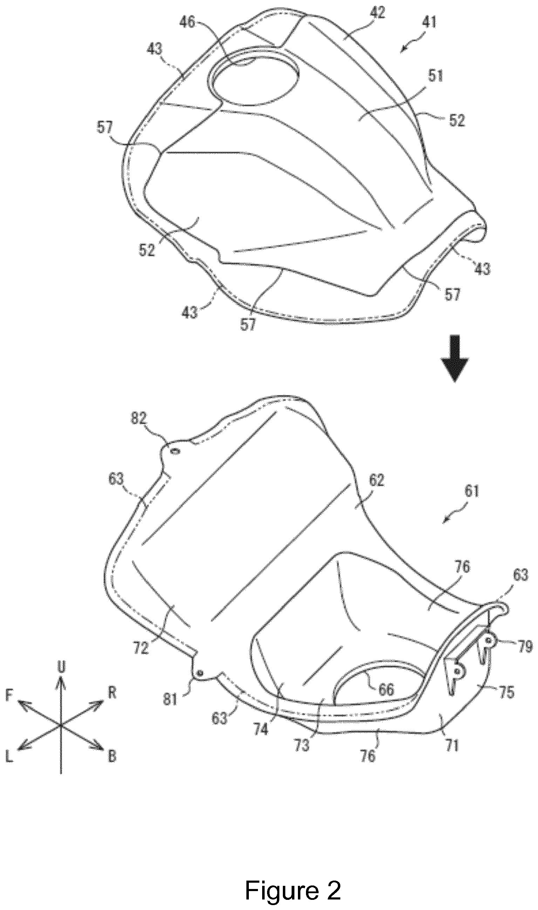

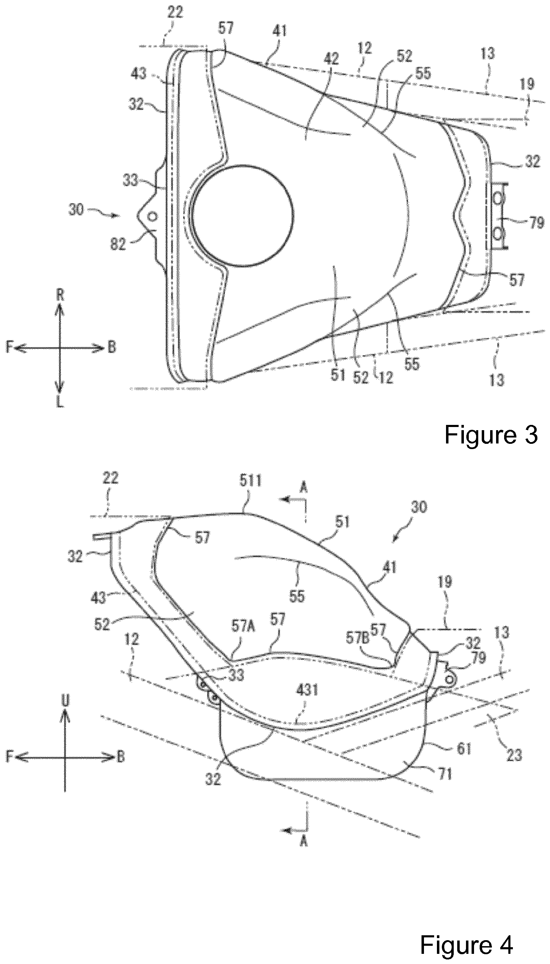

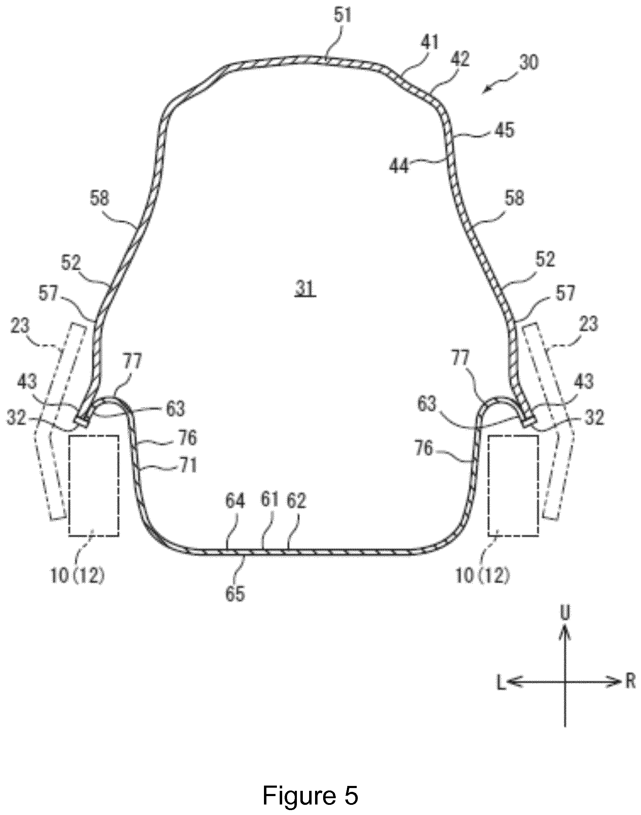

The fuel tank 30 will now be described. Figure 2 is a perspective view of first and second panels 41 and 61 that form the fuel tank 30. Figure 3 is a plan view of the fuel tank 30. Figure 4 is a left side view of the fuel tank 30. Figure 5 is a rear sectional view taken along line A-A in Figure 4. Top-bottom, front-back, and left-right directions of the fuel tank 30 refer to these directions when the fuel tank 30 is provided in the motorcycle 100.

General structures of the first and second panels 41 and 61 that form the fuel tank 30 will be described. The first panel 41 forms an upper part of the fuel tank 30. The second panel 61 forms a lower part of the fuel tank 30. The first panel 41 will be described first. As shown in Figure 2, the first panel 41 includes a first panel main body 42 and a first flange 43. The first panel main body 42 includes an upper surface 51 and a pair of side surfaces 52. The upper surface 51 forms an upper part of the first panel main body 42 from the front part to the rear part. The pair of side surfaces 52 forms a side part of the first panel main body 42 from the front part to the rear part. The side surfaces 52 are formed continuously with the upper surface 51. The side surfaces 52 are opposed in the left-right direction.

The first flange 43 is formed continuously with an end of the first panel main body 42. The first flange 43 is formed to surround the first panel main body 42. The width of the first flange 43 or the distance from an arbitrary edge of the first flange 43 to an edge of the first panel main body 42 is for example from 3 mm to 10 mm. The first flange 43 has a width of 5 mm. Optionally, at least part or all of a junction between the first flange 43 and the first panel main body 42 may be associated with a change in slope or surface shape or function. The first flange 43 is formed to combine the first panel 41 with the second panel 61.

The first panel main body 42 has a stepped part 57. The stepped part 57 is formed entirely around the first panel main body 42. At the stepped part 57, the position of the surface of the first panel main body 42 changes stepwise by one step. The amount of change in the position of the surface at the stepped part 57 is for example in a range from 2 mm to 5 mm. For example, at a front part of the upper surface 51, the position of the surface of the part ahead of the stepped part 57 is 3 mm to 4 mm lower stepwise in the downward direction than the level of the surface of the part behind the stepped part 57 in the vicinity of the stepped part 57. The stepped part 57 is formed to reduce the step between the first panel 41 and the seat 19, the cover 22, and the side covers 23 when the fuel tank 30 is provided in the motorcycle 100, and the seat 19, the cover 22, and the side covers 23 are placed on the rear part, front part, and lower parts of the side surfaces of the fuel tank 30, respectively. Stated differently, the stepped part 57 defines a boundary between the part of the first panel 41 covered with the seat 19, the cover 22, and the side covers 23 and the part not covered with these components and visible in the outer appearance of the motorcycle 100 while the fuel tank 30 is provided in the motorcycle 100. More specifically, the part of the first panel main body 42 nearer to the edge than the stepped part 57 and the first flange 43 are covered with the seat 19, the cover 22, and the side covers 23 while the fuel tank 30 is provided in the motorcycle 100. The part of the first panel main body 42 surrounded by the stepped part 57 corresponds to the part that is not covered with the seat 19, the cover 22, and the side covers 23 and visible in the outer appearance of the motorcycle 100 while the fuel tank 30 is provided in the motorcycle 100.

The upper surface 51 of the first panel 41 has an opening 46. A fuel feed portion (not shown) is attached to the opening 46. The fuel feed portion may include a fuel inlet and a cap that closes/opens the fuel inlet.

The second panel 61 will now be described. As shown in Figure 2, the second panel 61 includes a second panel main body 62 and a second flange 63. The second panel main body 62 includes a base part 71 and a front wall 72. The base part 71 has a bottom part 73, a front part 74, a rear part 75, and a pair of side parts 76. The front wall 72 is formed continuously with the front part 74 of the base part 71.

The second flange 63 is formed continuously with the edge of the second panel main body 62. The second flange 63 is formed to entirely surround the second panel main body 62. The width of the second flange 63, in other words, the distance from an arbitrary edge of the second flange 63 to an edge of the second panel main body 62 is for example from 3 mm to 10 mm. Optionally, at least part or all of a junction between the second flange 63 and the second panel main body 52 may be associated with a change in slope or surface shape. The second flange 63 has a width of 5 mm. The second flange 63 is formed to combine the second panel 61 with the first panel 41.

The second panel 61 includes attachment portions 79, 81, and 82. The attachment portions 79, 81, and 82 are used to secure the fuel tank 30 to the rear frames 13 and the tank frames 12. The second flange 63 is not formed in the area where the attachment portions 81 and 82 are formed.

An opening 66 is formed at the bottom part 73 of the second panel 61. A support (not shown) is attached to the opening 66. The support supports a fuel pump (not shown) disposed in the fuel tank 30.

The first and second panels 41 and 61 are produced by press-molding sheet metal of an aluminum-based material. The press-molded, first and second panels 41 and 61 are combined with each other and put together by welding the first and second flanges 43 and 63 together around the entire periphery. The second flange 63 is not formed in the area where the attachment portions 81 and 82 are formed, and therefore the first flange 43 is welded to the attachment portions 81 and 82 in that area.

Referring to Figures 3, 4, and 5, the fuel tank 30 will be described. In Figures 3, 4, and 5, the pair of left and right tank frames 12 and the pair of left and right rear frames 13 are indicated by virtual lines. The virtual lines show the positional relation between the fuel tank 30 and the tank frames 12 and the rear frames 13 while the fuel tank 30 is attached to the tank frames 12 and the rear frames 13.

As shown in Figure 3, the first panel 41 that forms the fuel tank 30 has a greater width in the left and right direction at the front part than at the rear part in a plan view. The distance between the side surfaces 52 of the first panel 41 in the left-right direction gradually decreases from the front part to the rear part of the first panel 41 in a plan view. The fuel tank 30 is attached to extend between the pair of left and right tank frames 12 and the pair of left and right rear frames 13.

The first and second panels 41 and 61 are connected by a joint 32 and a weld part 33. The joint 32 is formed by welding the first and second flanges 43 and 63 together entirely around the first and second panels 41 and 61. The weld part 33 is formed by welding the first flange 43 to the attachment portions 81 and 82.

In a plan view, the stepped part 57 is visible at the front and rear parts of the first panel main body 42. The part of the front part ahead of the stepped part 57 is covered with the cover 22 while the tank 30 is provided in the motorcycle 100. The part of the rear part behind the stepped part 57 is covered with the seat 19. The part of the first panel main body 42 behind the stepped part 57 provided at the front part and the part of the first panel main body 42 ahead of the stepped part 57 provided at the rear part are not covered with the cover 22 and the seat 19 and therefore visible in the outer appearance of the motorcycle 100.

As shown in Figure 4, in a side view, the upper surface 51 of the first panel 41 curves upward. More specifically, a middle part 511 positioned between a front end and a rear end of the first panel 41 is the highest. The height of the upper surface 51 gradually increases in the up-down direction from the front end to the middle part 511 and gradually decreases from the middle part 511 to the rear end.

In the first flange 43 of the first panel 41, the middle part 431 in the front-back direction curves to project downward in a side view. More specifically, the first flange 43 is inclined obliquely downward from the front part to the middle part 431 and obliquely upward from the middle part 431 to the rear part. The fuel tank 30 is attached so that the first flange 43 does not interfere with the tank frames 12 and the rear frames 13.

The stepped part 57 extends downward from the upper part at the front part of the side surface 52 and upward from the lower part at the rear part. The stepped part curves upward at the middle part of the side surface 52. The cover 22 is placed on the part ahead of and above a connection portion 57A between the stepped part 57 that extends downward from the upper part at the front part of the side surface 52 and the stepped part 57 that is curved upward at the middle part of the side surface 52. The seat 19 is placed on the part behind and above a connection portion 57B between the stepped part 57 that extends upward from the lower part at the rear part of the side surface 52 and the stepped part 57 that curves upward at the middle part of the side surface 52. The side cover 23 is placed on the part positioned below the stepped part 57 that curves upward at the middle part of the side surface 52.

As shown in Figure 5, the first and second panels 41 and 61 form a space 31 that stores fuel inside the fuel tank 30. The first panel 41 defines an upper part of the space 31 that stores fuel. The second panel 61 defines a lower part of the space 31 that stores fuel. An inner surface 44 of the first panel 41 and an inner surface 64 of the second panel 61 face the space 31 that stores fuel. An outer surface 45 of the first panel 41 and an outer surface 65 of the second panel 61 face the outside of the fuel tank 30.

The base part 71 of the second panel 61 is provided in a space between the left and right tank frames 12 and the left and right rear frames 13. A connection portion 77 is formed at each of upper parts of the pair of side parts 76 of the second panel 61. In a sectional view, the connection portion 77 is formed to curve toward the outside of the fuel tank 30 and downward with respect to the side part 76 of the base part 71. The connection portion 77 corresponds to the side surface 52 of the first panel 41. More specifically, the connection portion 77 corresponds to the lower part of the side surface 52 in shape and size in the left-right direction. In a sectional view, the side cover 23 is provided on the left of the left joint 32 and the side cover 23 is provided on the right of the right joint 32.

In a rear sectional view, the part of the lower part of the side surfaces 52 of the first panel 41 having the largest distance in the left-right direction corresponds to the positions of the outer surfaces of the tank frames 12 and the rear frame 13 in the left-right direction. More specifically, there is only a narrow step in the left-right direction between the part of the lower part of the side surface 52 of the first panel 41 having the largest distance in the left-right direction and the outer surfaces of the tank frames 12 and the rear frames 13 in the left-right direction. Therefore, when the side covers 23 are attached to the tank frames 12 and the rear frames 13, the step between the side surface 52 of the first panel 41 and the side cover 23 can be reduced.

### First Panel

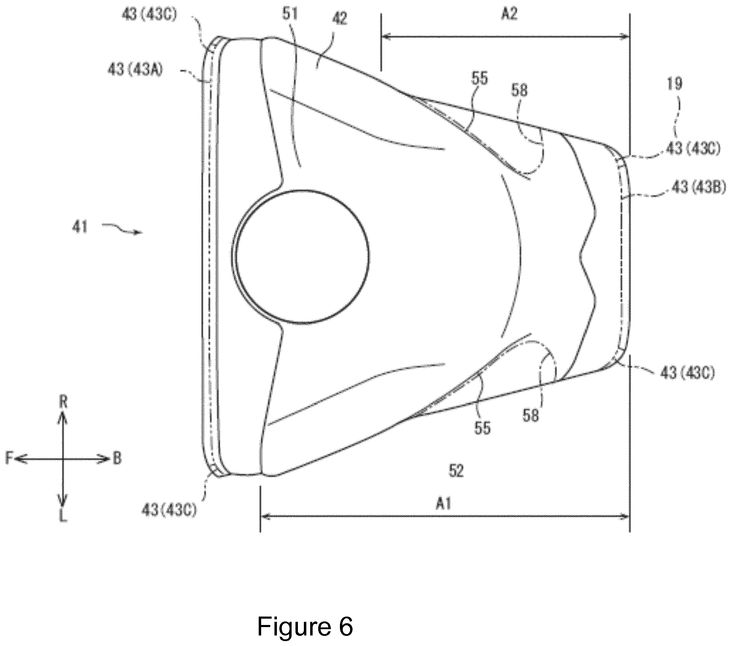

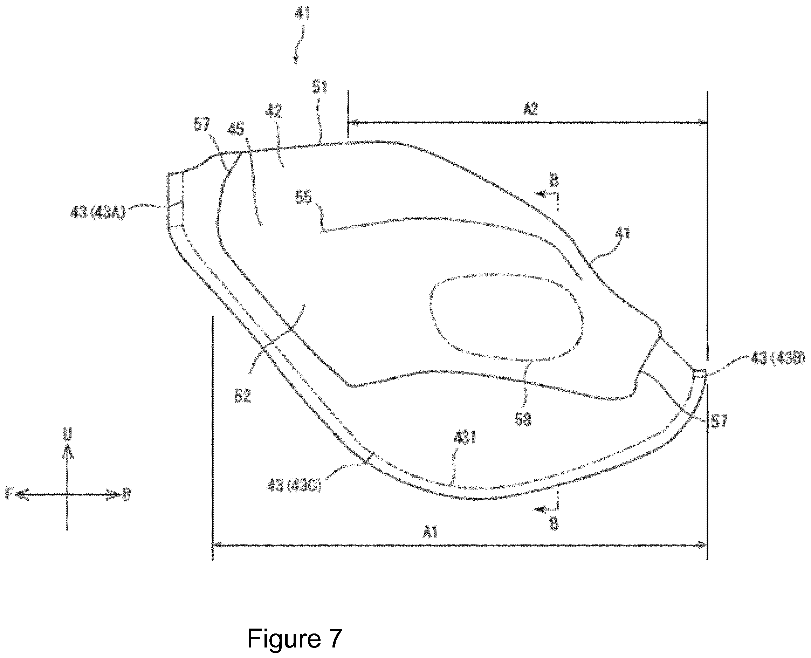

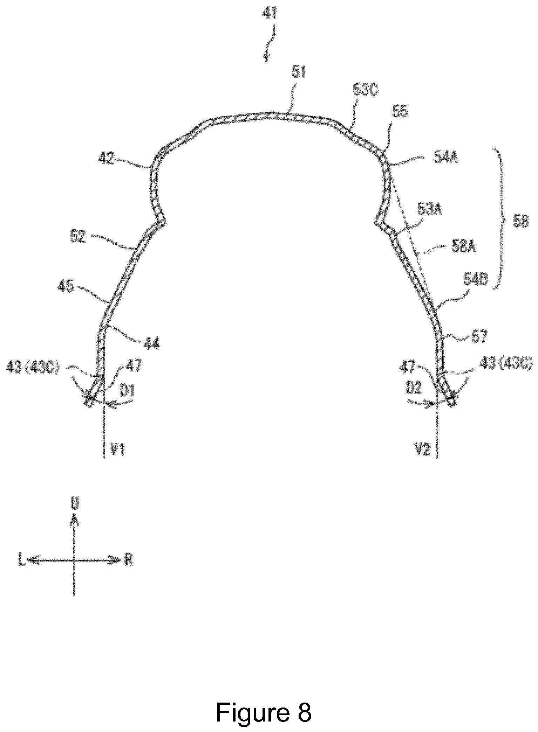

The first and second panels 41 and 61 will now be described in detail. The first panel 41 will be described first. Figure 6 is a plan view of the first panel 41. Figure 7 is a left side view of the first panel 41. Figure 8 is a rear sectional view taken along line B-B in Figure 7. As shown in Figure 6, in a plan view, the region in which the distance between the pair of side surfaces 52 in the left-right direction gradually decreases from the front part to the rear part of the first panel 41 is a first region A1. As shown in Figure 7, in a side view, the region in which the height of the upper surface 51 in the up-down direction gradually decreases from the front part to the rear part of the first panel 41 is a second region A2.

As shown in Figure 7, a ridge 55 is formed at the side surface 52 of the first panel main body 42. The ridge 55 is positioned at a boundary between the upper surface 51 and the side surface 52 of the first panel main body 42. At the ridge 55, the outer surface 45 of the first panel 41 is raised. The ridge 55 extends in the front-back direction of the first panel main body 42. A rear part of the ridge 55 is inclined downward.

The side surface 52 of the first panel main body 42 has a recess 58. The recess 58 is a curved surface formed by a recessed portion of the outer surface 45 of the first panel 41. The recess 58 is formed in a region surrounded by the ridge 55 and the stepped part 57. The recess 58 extends backward from the middle part of the first panel main body 42 in a side view. The recess 58 extending backward in the side view means that the recess 58 has a width in the up-down direction and is formed backward from the middle part of the side surface 52.

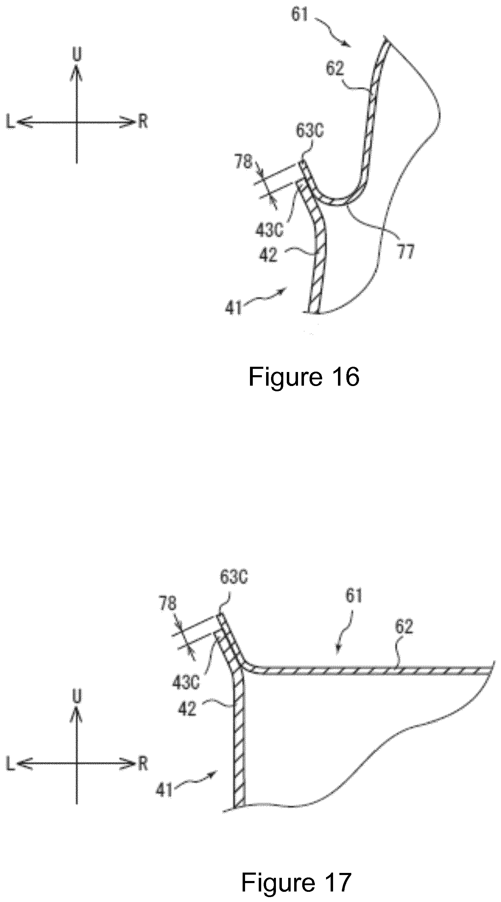

The first flange 43 is formed continuously with an edge of the first panel main body 42. The first flange 43 has a first front flange 43A, a first rear flange 43B, and a first side flange 43C. The first front flange 43A, the first rear flange 43B, and the first side flange 43C are continuous and formed to surround the first panel main body 42. The first flange 43 has such a shape that the second flange 63 has an excess part 78 when the first and second panels 41 and 61 are combined with each other (see Figures 16 and 17). The excess part 78 is the edge of the second flange 63 that projects beyond the edge of the first flange 43.

The first front flange 43A is formed continuously with a front end of the upper surface 51. The first front flange 43A extends forward from the front end of the upper surface 51 in a side view. A lower end of the first front flange 43A is continuous with the first side flange 43C.

The first rear flange 43B is formed continuously with a rear end of the upper surface 51. The first rear flange 43B extends backward from the rear end of the upper surface 51 in a side view. A lower end of the first rear flange 43B is continuous with the first side flange 43C.

The first side flange 43C is formed continuously with a lower end of the side surface 52. The first side flange 43C has a part inclined obliquely downward from the front part to the middle part 431 and a part inclined obliquely upward from the middle part 431 to the rear part in a side view. More specifically, in the first side flange 43C, the middle part 431 is curved to project downward.

As shown in Figure 6, the first front flange 43A is formed continuously with the front end of the upper surface 51. The first front flange 43A extends in the left-right direction along the front end of the upper surface 51 in a plan view. The right and left ends of the first front flange 43A are continuous with the first side flange 43C.

The first rear flange 43B is formed continuously with the rear end of the upper surface 51. The first rear flange 43B extends in the left-right direction along the rear end of the upper surface 51 in a plan view. The right and left ends of the first rear flange 43B are continuous with the first side flange 43C.

As shown in Figure 8, the side surface 52 has a convex surface 54A, a convex surface 54B, and a concave surface 53A. The convex surface refers to a curved surface formed by a raised part of the outer surface 45 of the first panel 41 in a rear sectional view. The concave surface refers to a curved surface formed by a recessed portion of the outer surface 45 of the first panel 41 in a rear sectional view.

The concave surface 53A is formed between the convex surfaces 54A and 54B in a rear sectional view. The concave surface 53A connects the convex surfaces 54A and 54B.

The first panel main body 42 has a concave surface 53C. The concave surface 53C is formed above the convex surface 54A in a rear sectional view. The concave surface 53C forms a part of the upper surface 51 of the first panel main body 42. The ridge 55 connects the concave surface 53C and the convex surface 54A. The ridge 55 is positioned at a boundary between the upper surface 51 and the side surface 52 of the first panel main body 42 in a rear sectional view.

A recess 58 is formed by a part of the convex surface 54A, a part of the convex surface 54B, and the concave surface 53A. More specifically, the concave surface 53A is formed in a recessed position with respect to a virtual line 58A connecting the apex of the convex surface 54A and the apex of the convex surface 54B in a rear sectional view.

The first side flange 43C is formed continuously with the lower end of the side surface 52. The first side flange 43C formed on the left of the first panel 41 extends obliquely leftward and downward. In a rear sectional view, if a vertical virtual line through the part where the first side flange 43C and the side surface 52 are connected is a virtual line V1, the opening angle D1 formed between the virtual line V1 and the left first side flange 43C is set from 3° to 60°. The opening angle D1 is preferably set from 20° to 40°.

Similarly, the first side flange 43C formed on the right of the first panel 41 extends obliquely rightward and downward. In a rear sectional view, if a vertical virtual line through the part where the first side flange 43C and the side surface 52 are connected is a virtual line V2, the opening angle D2 formed between the virtual line V2 and the right first side flange 43C is set from 3° to 60°. The opening angle D2 is preferably set from 20° to 40°.

### Second Panel

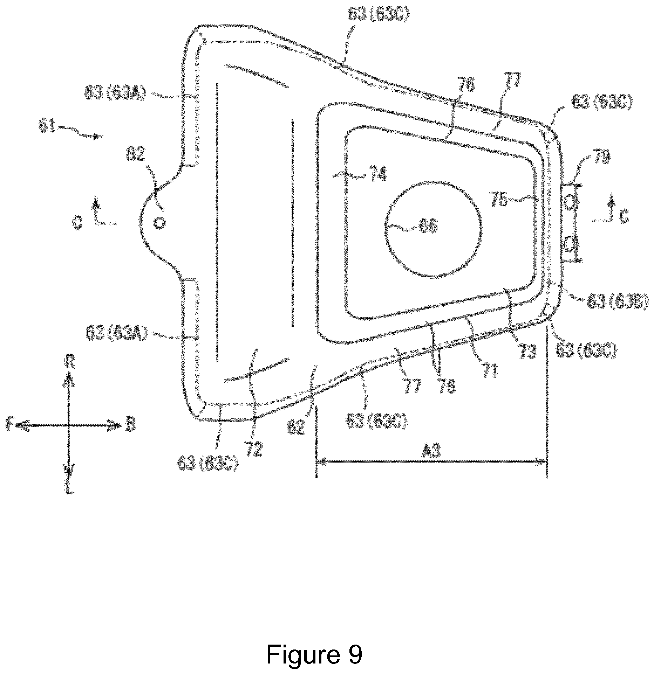

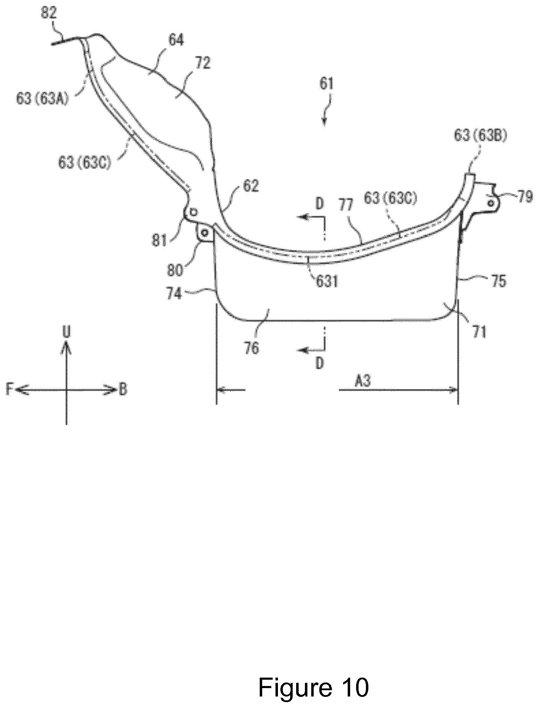

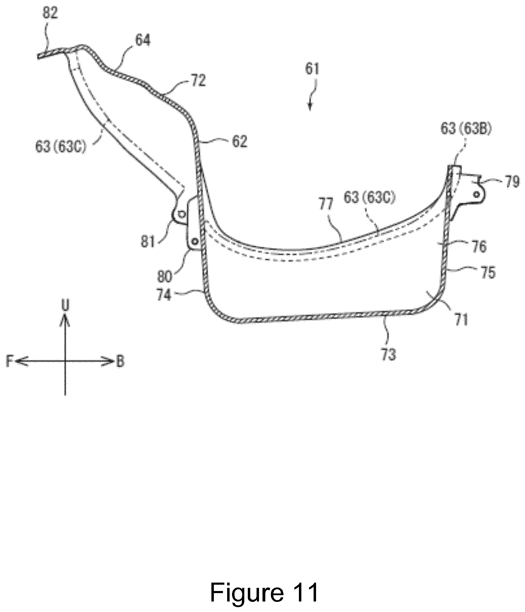

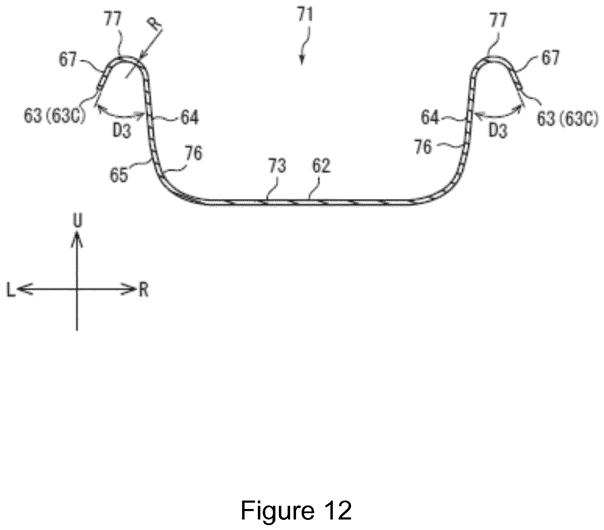

The second panel 61 will now be described. Figure 9 is a plan view of the second panel 61. Figure 10 is a left side view of the second panel 61. Figure 11 is a side sectional view taken along line C-C in Figure 9. Figure 12 is a rear sectional view taken along line D-D in Figure 10.

As shown in Figure 9, the second panel 61 includes the second panel main body 62 and the second flange 63. The second panel main body 62 includes the base part 71 and the front wall 72. In a plan view, the region in the front-back direction where the base part 71 is formed is a third region A3.

In the third region A3, the connection portions 77 are provided at the pair of side parts 76 that form the base part 71. The left connection portion 77 has a width in the left-right direction and extends in the front-back direction. The right connection portion 77 has a width in the left-right direction and extends in the front-back direction.

The second flange 63 is formed continuously with the edge of the second panel main body 62. The second flange 63 has a second front flange 63A, a second rear flange 63B, and a second side flange 63C. The second front flange 63A, the second rear flange 63B, and the second side flange 63C are formed continuously to surround the second panel main body 62.

The second front flange 63A is formed continuously with a front end of the front wall 72. The second front flange 63A extends forward from the front end of the front wall 72 in a plan view. The second front flange 63A is not formed at the attachment portion 82. The left and right ends of the second front flange 63A are continuous with the second side flanges 63C.

The second rear flange 63B is formed continuously with a rear end of the base part 71. The second rear flange 63B extends backward from the rear end of the base part 71 in a plan view. The left and right ends of the second rear flange 63B are continuous with the second side flanges 63C.

The second side flange 63C is formed continuously with the front wall 72 and the left and right ends of the base part 71. In the third region A3, the second side flange 63C is formed continuously with the connection portion 77 of the base part 71. Note that in the third region A3, the second side flange 63C is formed downward and therefore its width appears narrow in a plan view.

As shown in Figure 10, in the third region A3, the connection portion 77 is formed at the pair of side parts 76 that form the base part 71.

The front wall 72 is formed continuously with the front part 74 of the base part 71. The second front flange 63A is formed continuously with the front end of the front wall 72. The second front flange 63A extends forward from the front end of the front wall 72 in a side view.

The second rear flange 63B is formed continuously with the rear end of the base part 71. The second rear flange 63B extends backward from the rear end of the base part 71 in a side view.

The second side flange 63C is formed continuously with the lower end of the front wall 72 and the lower end of the connection portion 77 of the base part 71. The second side flange 63C is curved so that its middle part 631 between the front part and the rear part projects downward. The second side flange 63C is not formed at the attachment portion 81.

As shown in Figure 11, the left and right ends of the front wall 72 project ahead of the middle part of the front wall 72 in the left-right direction in a side sectional view. More specifically, at the inner surface 64 of the front wall 72, the middle part in the left-right direction projects behind both ends in the left-right direction.

As shown in Figure 12, the connection portions 77 are formed at the upper parts of the pair of side parts 76 that form the base part 71.

The connection portions 77 are curved outward from the side parts 76 of the base part 71. Being curved outward refers to the state in which the left connection portion 77 is curved to the left, so that the end of the connection portion 77 extends obliquely leftward and downward. It also refers to the state in which the right connection portion 77 is curved to the right, so that the end of the connection portion 77 extends obliquely rightward and downward. The second side flange 63C is formed continuously with the end of the curved connection portion 77.

Since the second side flange 63C is formed at the end of the curved connection portion 77, the second side flange 63C has an angle with respect to the side part 76. The angle formed by the outer surface 65 of the side part 76 and the outer surface 65 of the second side flange 63C is a third opening angle D3. The third opening angle D3 is set from 3° to 60° corresponding to the opening angles D1 and D2 of the first side flange 43C formed at the first panel 41. The opening angle D3 is preferably set from 20° to 40°.

The radius of curvature R of the connection portion 77 that connects the second panel main body 62 and the second flange 63 is set from 6 mm to 12 mm. More specifically, the radius of curvature R is the radius of curvature of the outer surface 65 at the part of the connection portion 77 curved outward with respect to the side part 76 of the base part 71.

### Manufacturing Method

A method of manufacturing the fuel tank 30 will now be described. The manufacturing method includes a first panel forming step (a first step), a second panel forming step (a second step), a combining step (a third step), and a welding step (a fourth step).

### First Panel Forming Step (First Step)

In the first panel forming step, the first panel 41 described above is formed. The first panel 41 is formed by press-working a sheet of an aluminum-based material. More specifically, the first panel main body 42 and the first flange 43 are formed by press-working. Specific shapes of the first panel main body 42 and the first flange 43 are as described above. The first flange 43 is formed so that the edge of the second flange 63 has the excess part 78 that projects beyond the edge of the first flange 43 while the first and second panels 41 and 61 are combined with each other (Figures 16 and 17). The first panel 41 according to the embodiment is formed by press-working a single sheet of an aluminum-based material.

A sheet of Al (pure aluminum)or aluminum alloy, such as an Al-Mg-based alloy, or an Al-Si-Mg-based alloy is preferably used for forming the first panel 41 in consideration of strength and workability.

The first panel 41 preferably has a reduced sheet thickness in order to reduce the weight of the fuel tank 30. The thickness of the first panel 41 is determined in consideration of workability and strength required for the fuel tank 30.

### Second Panel Forming Step (Second Step)

In the second panel forming step, the above-described second panel 61 is formed. The second panel 61 is formed by press-working a sheet of an aluminum-based material. More specifically, the second panel main body 62 and the second flange 63 are formed by press-working. Specific shapes of the second panel main body 62 and the second flange 63 are as described above. The second flange 63 is formed to have the excess part 78 (Figures 16 and 17) when the first and second panels 41 and 61 are combined with each other.

Sheet metal of Al (pure aluminum) or an aluminum alloy, such as an Al-Mg-based alloy, or an Al-Si-Mg-based alloy is preferably used for forming the second panel 61 in consideration of strength and workability similarly to the first panel 41.

The second panel 61 preferably has a reduced sheet thickness in order to reduce the weight of the fuel tank 30. The sheet thickness of the second panel 61 is determined in consideration of workability and strength required for the fuel tank 30.

As shown in Figure 12, when the second panel main body 62 is formed, the opening angle D3 of the second flange 63 with respect to the second panel main body 62 is set in a range from 20° to 40°. More specifically, the angle of the curved part of the connection portion 77 is set so that the opening angle D3 of the second flange 63 with respect to the second panel main body 62 is set in a range from 20° to 40°.

As shown in Figure 12, when the second panel main body 62 is formed, the radius of curvature R of the connection portion 77 that connects the second panel main body 62 and the second flange 63 is set in a range from 6 mm to 12 mm.

The second panel 61 may be formed by press-working a single sheet of metal or by putting together a number of press-worked members. For example, the base part 71 and the front wall 72 that form the second panel 61 may be formed separately by press-working. The base part 71 and the front wall 72 obtained by separate press-working are joined by welding means to form the second panel 61. The base part 71 and the front wall 72 may be welded by arc welding means such as MIG welding or laser welding means. The second panel 61 may be separated into three or more parts and formed, and the parts may be put together to form the second panel 61.

### Combining Step (Third Step)

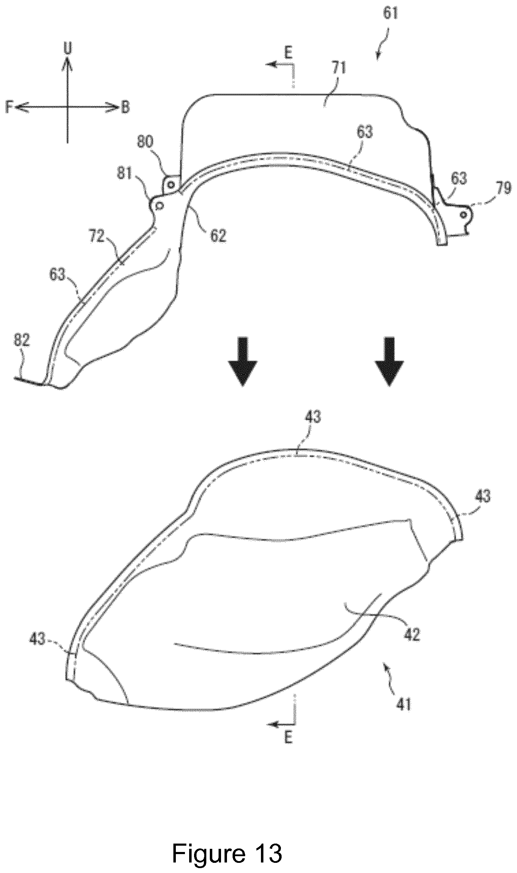

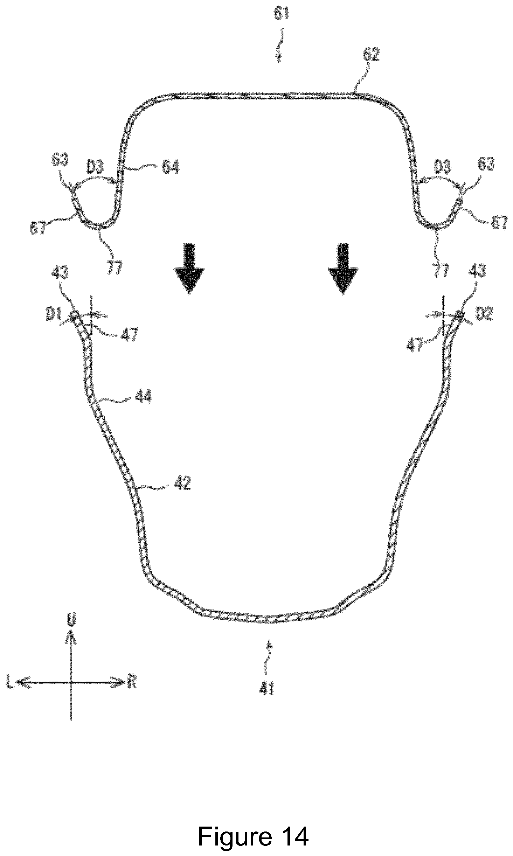

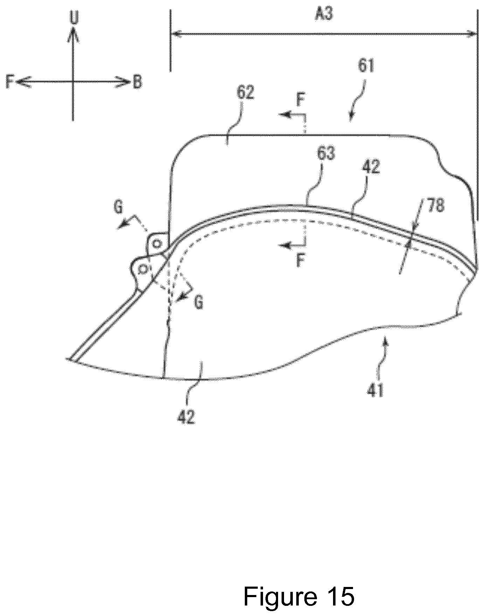

Figure 13 is a left side view showing how the second panel 61 is provided on the first panel 41 in the combining step. Figure 14 is a rear sectional view taken along line E-E in Figure 13. Figure 15 is a left side view showing how the second panel 61 is provided on the first panel 41 in the combining step. Figure 16 is an enlarged rear sectional view taken along line F-F in Figure 15. Figure 17 is an enlarged rear sectional view taken along line G-G in Figure 15.

In the combining step, the first and second flanges 43 and 63 are opposed and the first and second panels 41 and 61 are combined with each other.

As shown in Figure 13, when the first panel 41 and the second panel 61 are combined with each other, the second panel 61 is placed over the first panel 41.

As shown in Figure 14, while the second panel 61 is placed over the first panel 41, the first flange 43 of the first panel 41 and the second flange 63 of the second panel 61 are opposed. More specifically, the first surface 47 of the first flange 43 is continuous with the inner surface 44 of the first panel main body 42 is opposed to the second surface 67 of the second flange 63 continuous with the inner surface 64 of the second panel main body 62.

As shown in Figure 15, the second panel 61 is placed on the first panel 41 and the first and second panels 41 and 61 are combined with each other. While the first and second panels 41 and 61 are combined with each other, the first and second panels 41 and 61 are arranged so that the excess part 78 of the edge of the second flange 63 projects beyond the edge of the first flange 43 at the entire periphery. Note that the excess part 78 is not formed at the attachment portions 81 and 82 where the second flange 63 is not formed.

As shown in Figure 16, in the third region A3, the first side flange 43C and the second side flange 63C are combined with each other. The excess part 78 corresponds to the edge of the second side flange 63C that projects beyond the edge of the first side flange 43C.

As shown in Figure 17, the first side flange 43C is combined with the second side flange 63C in the region other than the third region. The excess part 78 corresponds to the part of the edge of the second side flange 63C that projects beyond the edge of the first side flange 43C.

Although not shown, the first front flange 43A is combined with the second front flange 63A. The excess part 78 corresponds to the part of the edge of the second front flange 63A that projects beyond the edge of the first front flange 43A. The first rear flange 43B is combined with the second rear flange 63B. The excess part 78 corresponds to the part of the edge of the second rear flange 63B that projects beyond the edge of the first rear flange 43B.

### Welding Step (Fourth Step)

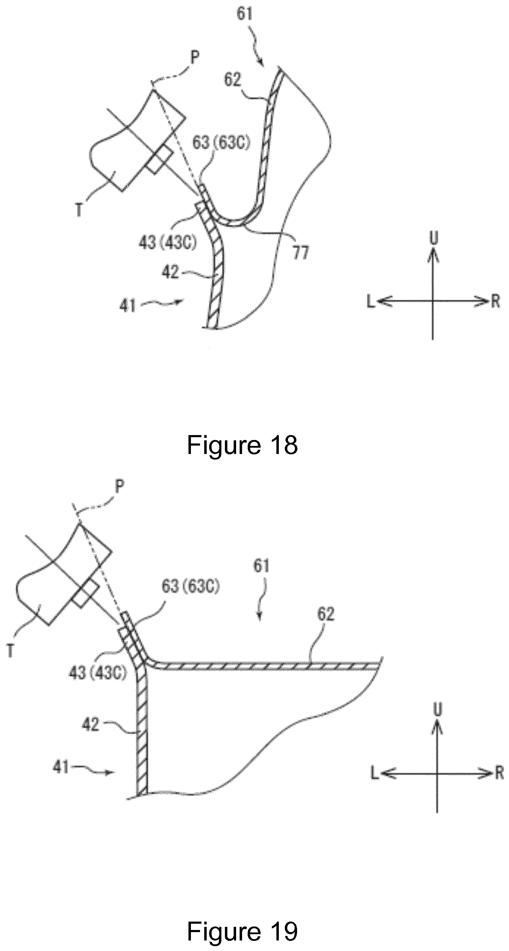

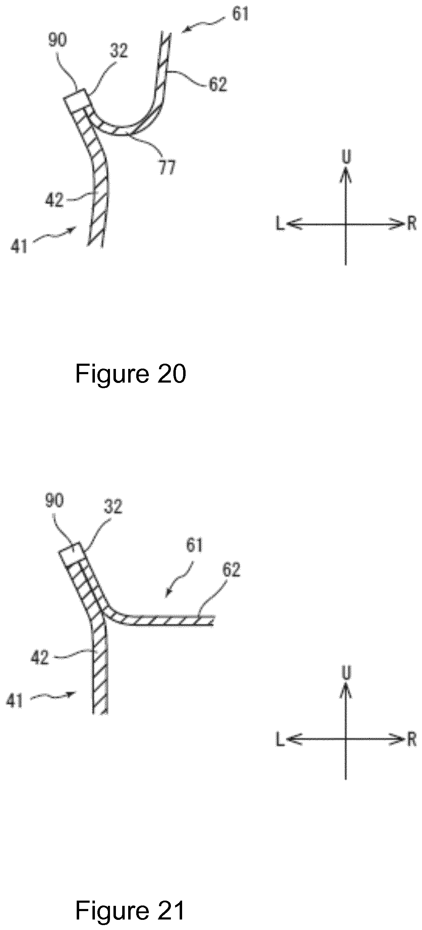

Figure 18 is an enlarged rear sectional view showing a positional relation between a part taken along line F-F in Figure 15 and a torch T in the welding step. Figure 19 is an enlarged rear sectional view showing a positional relation between a part taken along line G-G in Figure 15 and the torch T in the welding step. Figure 20 is an enlarged rear sectional view showing the part taken along line F-F in Figure 15 after welding in the welding step. Figure 21 is an enlarged rear sectional view showing the part taken along line G-G in Figure 15 after welding in the welding step.

In the welding step, the edges of the first and second flanges 43 and 63 are welded together. As shown in Figures 18 and 19, in the welding step, when the excess part 78 is welded, the torch T is provided on the side of the first flange 43 with respect to a virtual plane P defined by extending the second flange 63. The torch T is provided on the side of the first flange 43 with respect to the virtual plane P, so that the edge of the first flange 43 and the edge of the second flange 63 can be welded together appropriately even when the excess part 78 is formed. In contrast, for example in Figure 19, when the torch T is provided on the side of the second flange 63 with respect to the virtual plane P, arc from the torch T to the first flange 43 is blocked by the second flange 63, which makes it difficult to appropriately weld the edge of the first flange 43 and the edge of the second flange 63 together. Note that MIG welding means or laser welding means is preferably employed for welding.

As shown in Figures 20 and 21, according to the embodiment, the second panel 61 is thinner than the first panel 41. When the edge of the first flange 43 and the edge of the second flange 63 are welded together, the thinner second flange 63 melts more easily than the first flange 43. Therefore, when the edges of the first and second flanges 43 and 63 are welded together, the excess part 78 of the second flange 63 melts faster than the edge of the first flange 43, and a weld bead 90 forms at the edges of the first and second flanges 43 and 63. The excess part 78 no longer exists where the weld bead 90 forms. The weld bead 90 forms the joint 32.

Note that the second panel 61 is provided on the first panel 41 and therefore when the first and second flanges 43 and 63 are welded together, the weld bead 90 is likely to form at the top edges of the first and second flanges 43 and 63 by gravity.

Before the first and second flanges 43 and 63 are welded together, the first and second flanges 43 and 63 may be secured provisionally. The first and second flanges 43 and 63 may be secured provisionally by forming members for provisional securing in advance at the first and second flanges 43 and 63 and the members may be welded together to provisionally secure the first and second flanges 43 and 63. After the first and second flanges 43 and 63 are secured by welding, the members for provisional securing are removed. The first and second flanges 43 and 63 may be provisionally secured directly to each other.

### Advantages of the Embodiment

The method of manufacturing the fuel tank 30 according to the embodiment described above may include the first panel forming step (first step), the second forming step (second step), the combining step (third step), and the welding step (fourth step). In the first panel forming step, a sheet of an aluminum-based material is formed into the first panel 41. The first panel forming step includes forming the first flange 43 to be combined with the first panel main body 42 and the second panel 61. In the second panel forming step, a sheet of an aluminum-based material is formed into the second panel 61 that is thinner than the first panel 41. The second panel forming step includes forming the second flange 63 to be combined with the second panel main body 62 and the first panel 41. In the combining step, the first and second flanges 43 and 63 are opposed, and the first panel 41 and the second panel 61 are combined with each other so that the excess part 78 of the edge of the second flange 63 projects beyond the edge of the first flange 43. In the welding step, the edge of the first flange 43 and the edge of the second flange 63 are welded together.

According to the embodiment, when the first and second flanges 43 and 63 are combined in the combining step, correction to reduce a gap generated between the first and second flanges 43 and 63 can be carried out if any by pinching and deforming the first and second flanges 43 and 63. More specifically, the first and second flanges 43 and 63 are pinched from the outside using a jig or the like to deform, so that a gap generated between the first and second flanges 43 and 63 can be reduced. Therefore, an allowance may be provided in dimensional management of the first and second flanges 43 and 63 in the gap direction while the welding accuracy can be improved.

Moreover, according to the embodiment, the second flange 63 has the excess part 78 that projects beyond the edge of the first flange 43. The second flange 63 is formed to have the excess part 78 with respect to the first flange 43. Therefore, even if there is a dimensional error in the first and second flanges 43 and 63, the positional relation in which the edge of the second flange 63 projects beyond the edge of the first flange 43 is easily maintained while the first and second panels 41 and 61 are combined. More specifically, if there is a dimensional error in the first and second flanges 43 and 63, a reversed positional relation in which the edge of the first flange 43 projects beyond the edge of the second flange 63 is unlikely. Therefore, the first and second flanges 43 and 63 may be welded together while allowing dimensional errors in the first and second flanges 43 and 63, so that an allowance is provided in dimensional management of the edges of the first and second flanges 43 and 63 in the projecting direction while the welding accuracy can be improved.

Furthermore, the second panel 61 is thinner than the first panel 41 and the thinner second flange 63 more easily melts than the first flange 43 when the edges of the first and second flanges 43 and 63 are welded together. Therefore, the excess part 78 of the second flange 63 melts faster than the first flange 43 when the edges of the first and second flanges 43 and 63 are welded together. As a result, the weld bead 90 formed from the excess part 78 forms at the edges of the first and second flanges 43 and 63, and the first flange 43 and the second flanges 63 are put together.

By the method of manufacturing the fuel tank 30 according to the embodiment, in the combining step, the first surface 47 of the first flange 43 continuous with the inner surface 44 of the first panel main body 42 is opposed to the second surface 67 of the second flange 63 continuous with the inner surface 64 of the second panel main body 62.

According to the embodiment, if a gap is generated between the first and second flanges 43 and 63, correction to reduce the gap can be carried out by pinching the first and second flanges 43 and 63. Therefore, an allowance can be provided in dimensional management of the first and second flanges 43 and 63 in the gap direction.

By the method of manufacturing the fuel tank 30 according to the embodiment, in the second panel forming step, the opening angle D3 of the second flange 63 with respect to the second panel main body 62 is set in a range from 20° to 40°.

If the first and second flanges 43 and 63 are extended in the horizontal direction, it would increase the operability, or correction would be easier in welding. However, if the width of the fuel tank cannot be increased, the fuel tank cannot have a sufficient capacity. Conversely, if the first and second flanges 43 and 63 are extended downward, it would lower the operability and correction would not be easier in welding but the fuel tank can have a sufficient capacity. According to the embodiment, the opening angle D3 of the second flange 63 with respect to the second panel main body 62 is set in a range from 20° to 40°. Therefore, the fuel tank 30 may have a sufficient capacity while a space for operation to correct the gap between the first and second panels 41 and 61 and correct welding may be provided.

Note that opening angles D1 and D2 of the first flange 43 and the opening degree D3 of the second flange 63 may be set to the same angle, so that a gap is unlikely to form between the first and second flanges 43 and 63 when the first and second flanges 43 and 63 are combined. The opening angles D1 and D2 of the first flange 43 may be smaller than the opening angle D3 of the second flange 63, so that a gap is unlikely to form between the first flange 43 and the second flange 63 when the first and second flanges 43 and 63 are combined.

By the method of manufacturing the fuel tank 30 according to the embodiment, in the second panel forming step, the connection portion 77 as the connecting part between the second panel main body 62 and the second flange 63 has a radius of curvature from 6 mm to 12 mm.

If the first and second flanges 43 and 63 are extended in the horizontal direction, it would increase the operability or correction would be easier in welding. If the width of the fuel tank cannot be increased, the fuel tank cannot have a sufficient capacity. Conversely, if the first and second flanges 43 and 63 are extended downward, it would lower the operability and correction would not be easier in welding but the fuel tank can have a sufficient capacity. According to the embodiment, the radius of curvature of the connecting part between the second panel main body 62 and the second flange 63 is set from 6 mm to 12 mm. Therefore, the fuel tank 30 may have a sufficient capacity while a space for operation to correct a gap between the first and second panels 41 and 61 and correct welding may be provided.

By the method of manufacturing the fuel tank 30 according to the embodiment, in the combining step, the second panel 61 is provided on the first panel 41.

According to the embodiment, the second panel 61 is provided on the first panel 41 and the panels are welded together in this state. In this way, the weld bead 90 easily forms at the edges of the first and second flanges 43 and 63 by gravity during welding, so that the fuel tank 30 may easily improve its airtightness.

By the method of manufacturing the fuel tank 30 according to the embodiment, when the excess part 78 is welded in the welding step, the torch T is provided on the side of the first flange 43 with respect to the virtual plane P defined by extending the second flange 63.

According to the embodiment, the arrangement of the torch T makes it easier to aim the edges of the first and second flanges 43 and 63 with the torch T.

By the method of manufacturing the fuel tank 30 according to the embodiment, in the welding step, MIG welding means or laser welding means is used.

According to the embodiment, the MIG welding or laser welding means is suitable for welding aluminum, and therefore the welding can be carried out with high accuracy.

In the fuel tank 30 manufactured by the method of manufacturing a fuel tank according to the embodiment, the second panel 61 is thinner than the first panel 41. Since the welding accuracy can be improved, the fuel tank 30 with improved airtightness can be provided.

The fuel tank 30 has the weld bead 90 at the joint 32 between the edges of the first and second flanges 43 and 63, and therefore the fuel tank 30 with improved airtightness can be provided.

A straddled vehicle 100 including the fuel tank 30 having reduced weight can therefore have high traveling performance.

### Modifications

The method of manufacturing an aluminum fuel tank according to the invention is not limited to that according to the embodiment described above. For example, according to the embodiment, the first panel 41 forms the upper part of the fuel tank 30, and the second panel 61 forms the lower part of the fuel tank 30. But the invention is not limited to the arrangement. The first and second panels 41 and 61 need only be members that form the fuel tank 30. More specifically, it is only necessary that the first and second panels 41 and 61 having different thicknesses are welded together and form at least a part of the fuel tank 30. For example, the first panel 41 may form the lower part of the fuel tank 30 and the second panel 61 may form the upper part of the fuel tank 30.

The first panel 41 formed in the first panel forming step and the second panel 61 formed in the second panel forming step do not have to be formed in this order and the second panel 61 may be formed first or the panels may be formed simultaneously.

The shape of the fuel tank 30 is not limited to the shape according to the embodiment. The tank may have an outer shape different from the shown shape. For example, the position of the first and second flanges 43 and 63 to form the joint 32 of the first and second panels 41 and 61 may be in a different position from the above for example in consideration of the design of a straddled vehicle or the layout of components.

According to the above-described embodiment, the straddled vehicle is the touring motorcycle 100, but the straddled vehicle may be a motorcycle other than the touring motorcycle or a three-wheeled or four-wheeled straddled vehicle.

The embodiment of the present invention has been described but the same is only exemplary illustration of how the present invention is carried out. Therefore, the invention is not limited by the description of the embodiments and modifications may be made to the above-described embodiments without departing the scope of the invention, as defined by the claims.

It will be appreciated that the term straddled vehicle or motor vehicle used herein, and as used in the art, is meant to include the following terms also used in the art:
straddle-type vehicle, saddle-ride type vehicle or motor vehicle, saddle-straddling type vehicle or motor vehicle, and includes: motorcycles and motorbikes as well as motor tricycles and All Terrain Vehicles (ATVs), scooters, mopeds and snowmobiles.
   - It will be appreciated that references to aluminum-based, aluminum and aluminum alloys can also be written as aluminium-based, aluminium and aluminium alloys respectively.

## Claims

1. A method of manufacturing an aluminum-based fuel tank (30), comprising:
a first step of forming a first panel (41) that forms a space for storing fuel using a sheet of an aluminum-based material;
a second step of forming a second panel (61) that forms the space and has a smaller sheet thickness than the first panel (41)using a sheet of an aluminum-based material,
the first step comprising a first sub step of forming a first panel main body (42) for storing fuel and a first flange (43) to be combined with the second panel (61),
the second step comprising a first sub step of forming a second panel main body (62) for storing fuel and a second flange (63) to be combined with the first panel (41); and **characterized by** :
a third step of combining the first and second panels (41,61) with each other so that the first and second flanges (43,63) are opposed and an edge of the second flange (63) has an excess part (78) that projects beyond an edge of the first flange (43); and
a fourth step of welding the edge of the first flange (43) and the edge of the second flange (63) together.

2. The method of manufacturing an aluminum fuel tank (30) according to claim 1, wherein in the third step, a first surface (47) of the first flange (43) continuous with an inner surface (44) of the first panel main body (42) and a second surface (67) of the second flange (63) continuous with an inner surface (64) of the second panel main body (62) are opposed.

3. The method of manufacturing an aluminum fuel tank (30) according to claim 1 or 2, wherein in the first sub step of the second step, an opening angle (D3) of the second flange (63) with respect to the second panel main body (62) is set in a range from 3° to 60°.

4. The method of manufacturing an aluminum fuel tank (30) according to any one of claims 1 to 3, wherein in the first sub step of the second step, a connection part (77) between the second panel main body (62) and the second flange (63) has a radius of curvature (R) set in a range from 6 mm to 12 mm.

5. The method of manufacturing an aluminum fuel tank (30) according to any one of claims 1 to 4, wherein in the third step, the second panel (61) is provided on the first panel (41).

6. The method of manufacturing an aluminum fuel tank (30) according to any one of claims 1 to 5, wherein in the fourth step, when the excess part (78) is welded, a welding torch (T) is provided on a side of the first flange (43) with respect to a virtual plane (P) defined by extending the second flange (63).

7. The method of manufacturing an aluminum fuel tank (30) according to any one of claims 1 to 6, wherein in the fourth step, arc welding is used.

8. The method of manufacturing an aluminum fuel tank (30) according to any one of claims 1 to 6, wherein in the fourth step, laser welding is used.

## Patentansprüche

1. Verfahren zur Herstellung eines Kraftstofftanks auf Aluminiumbasis (30), Folgendes beinhaltend:
einen ersten Schritt des Bildens einer ersten Platte (41), die einen Raum zur Lagerung von Kraftstoff bildet, unter Verwendung eines Blechs aus Material auf Aluminiumbasis;
einen zweiten Schritt des Bildens einer zweiten Platte (61), die den Raum bildet und eine geringere Blechdicke als die erste Platte (41) aufweist, unter Verwendung eines Blechs aus Material auf Aluminiumbasis,
wobei der erste Schritt einen ersten Unterschritt des Bildens eines Hauptkörpers der ersten Platte (42) zur Lagerung von Kraftstoff und eines ersten Flansches (43) zur Kombination mit der zweiten Platte (61) beinhaltet,
wobei der zweite Schritt einen ersten Unterschritt des Bildens eines Hauptkörpers der zweiten Platte (62) zur Lagerung von Kraftstoff und eines zweiten Flansches (63) zur Kombination mit der ersten Platte (41) beinhaltet,
und **gekennzeichnet durch**:
einen dritten Schritt des Kombinierens der ersten und der zweiten Platte (41, 61) miteinander in der Weise, dass der erste und der zweite Flansch (43, 63) einander gegenüber liegen und eine Kante des zweiten Flansches (62) einen überstehenden Abschnitt (78) besitzt, der über eine Kante des ersten Flansches (43) hinaussteht; und
einen vierten Schritt des Verschweißens der Kante des ersten Flansches (43) und der Kante des zweiten Flansches (63) miteinander.

2. Verfahren zur Herstellung eines Aluminiumkraftstofftanks (30) nach Anspruch 1, bei welchem im dritten Schritt eine erste Fläche (47) des ersten Flansches (43), durchgängig mit einer inneren Fläche (44) des Hauptkörpers der ersten Platte (42), und eine zweite Fläche (67) des zweiten Flansches (63), durchgängig mit einer inneren Fläche (64) des Hauptkörpers der zweiten Platte (62), einander gegenüberliegen.

3. Verfahren zur Herstellung eines Aluminiumkraftstofftanks (30) nach Anspruch 1 oder 2, bei welchem im ersten Unterschritt des zweiten Schrittes ein Öffnungswinkel (D3) des zweiten Flansches (63) in Bezug auf den Hauptkörper der zweiten Platte (62) auf einen Bereich von 3° bis 60° festgelegt ist.

4. Verfahren zur Herstellung eines Aluminiumkraftstofftanks (30) nach einem der Ansprüche 1 bis 3, bei welchem im ersten Unterschritt des zweiten Schrittes ein Verbindungsabschnitt (77) zwischen dem Hauptkörper der zweiten Platte (62) und dem zweiten Rand (63) einen Krümmungsradius (R) besitzt, der auf einen Bereich von 6 mm bis 12 mm festgelegt ist.

5. Verfahren zur Herstellung eines Aluminiumkraftstofftanks (30) nach einem der Ansprüche 1 bis 4, bei welchem im dritten Schritt die zweite Platte (61) auf der ersten Platte (41) bereitgestellt wird.

6. Verfahren zur Herstellung eines Aluminiumkraftstofftanks (30) nach einem der Ansprüche 1 bis 5, bei welchem im vierten Schritt, wenn der überstehende Abschnitt (78) geschweißt wird, ein Schweißbrenner (T) an einer Seite des ersten Flansches (43) in Bezug auf eine virtuelle Ebene (P) bereitgestellt wird, die durch Verlängern des zweiten Flansches (63) definiert wird.

7. Verfahren zur Herstellung eines Aluminiumkraftstofftanks (30) nach einem der Ansprüche 1 bis 6, bei welchem im vierten Schritt Bogenschweißen eingesetzt wird.

8. Verfahren zur Herstellung eines Aluminiumkraftstofftanks (30) nach einem der Ansprüche 1 bis 6, bei welchem im vierten Schritt Laserschweißen eingesetzt wird.

## Revendications

1. Procédé de fabrication d'un réservoir de carburant à base d'aluminium (30), comprenant :
une première étape de formation d'un premier panneau (41) qui forme un espace destiné à stocker du carburant en utilisant une tôle d'un matériau à base d'aluminium ;
une deuxième étape de formation d'un deuxième panneau (61) qui forme l'espace et a une épaisseur de tôle plus petite que le premier panneau (41) en utilisant une tôle d'un matériau à base d'aluminium,
la première étape comprenant une première sous-étape de formation d'un corps principal de premier panneau (42) destiné à stocker du carburant et d'une première bride (43) à combiner avec le deuxième panneau (61),
la deuxième étape comprenant une première sous-étape de formation d'un corps principal de deuxième panneau (62) destiné à stocker du carburant et d'une deuxième bride (63) à combiner avec le premier panneau (41) ;
et **caractérisé par** :
une troisième étape de combinaison des premier et deuxième panneaux (41, 61) l'un avec l'autre de sorte que les première et deuxième brides (43, 63) sont opposées et un bord de la deuxième bride (63) a une partie excédentaire (78) qui fait saillie au-delà d'un bord de la première bride (43) ; et
une quatrième étape de soudage du bord de la première bride (43) et du bord de la deuxième bride (63) ensemble.

2. Procédé de fabrication d'un réservoir de carburant en aluminium (30) selon la revendication 1, dans lequel dans la troisième étape, une première surface (47) de la première bride (43) continue avec une surface interne (44) du corps principal de premier panneau (42) et une deuxième surface (67) de la deuxième bride (63) continue avec une surface interne (64) du corps principal de deuxième panneau (62) sont opposées.

3. Procédé de fabrication d'un réservoir de carburant en aluminium (30) selon la revendication 1 ou 2, dans lequel dans la première sous-étape de la deuxième étape, un angle d'ouverture (D3) de la deuxième bride (63) par rapport au corps principal de deuxième panneau (62) est établi dans une plage allant de 3° à 60°.

4. Procédé de fabrication d'un réservoir de carburant en aluminium (30) selon l'une quelconque des revendications 1 à 3, dans lequel dans la première sous-étape de la deuxième étape, un raccord (77) entre le corps principal de deuxième panneau (62) et la deuxième bride (63) a un rayon de courbure (R) établi dans une plage allant de 6 mm à 12 mm.

5. Procédé de fabrication d'un réservoir de carburant en aluminium (30) selon l'une quelconque des revendications 1 à 4, dans lequel dans la troisième étape, le deuxième panneau (61) est prévu sur le premier panneau (41).

6. Procédé de fabrication d'un réservoir de carburant en aluminium (30) selon l'une quelconque des revendications 1 à 5, dans lequel dans la quatrième étape, lorsque la partie excédentaire (78) est soudée, une torche de soudage (T) est prévue sur un côté de la première bride (43) par rapport à un plan virtuel (P) défini par le prolongement de la deuxième bride (63).

7. Procédé de fabrication d'un réservoir de carburant en aluminium (30) selon l'une quelconque des revendications 1 à 6, dans lequel dans la quatrième étape un soudage à l'arc est utilisé.

8. Procédé de fabrication d'un réservoir de carburant en aluminium (30) selon l'une quelconque des revendications 1 à 6, dans lequel dans la quatrième étape un soudage au laser est utilisé.
